Europäisches Patentamt

European Patent Office

Office européen des brevets

(11) Publication number: **0 241 991**
**A2**

# EUROPEAN PATENT APPLICATION

(21) Application number: 87200648.1

(51) Int. Cl.⁴: **G01N 27/00**

(22) Date of filing: 06.04.87

(30) Priority: **07.04.86 NL 8600872**

(43) Date of publication of application:
**21.10.87 Bulletin 87/43**

(84) Designated Contracting States:
**DE FR GB IT NL**

(71) Applicant: **Sentron v.o.f.**
**Oosteinde 8**
**NL-9301 LJ Roden(NL)**

(72) Inventor: **Schreurs, Joannes Peter Gerardus**
**Maria**
**Roderweg 72**
**NL-9301 RG Roden(NL)**
Inventor: **Talma, Auke Gerardus**
**'t Zuden 18**
**NL-9351 CV Leek(NL)**

(74) Representative: **Smulders, Theodorus A.H.J.**
**et al**
**Vereenigde Octrooibureaux Nieuwe Parklaan**
**107**
**NL-2587 BP 's-Gravenhage(NL)**

(54) Field effect transistor having a membrane overlying the gate insulator.

(57) A field effect transistor is provided that includes a membrane overlying its gate insulator. The field effect transistor has separated semiconductor drain and source regions of a polarity opposite to that of the substrate. An electrically insulating layer overlies the gate region between the source and drain region to thereby function as a gate insulator. A membrane overlies the electrically insulating layer, and an electrical contact electrically connects the field effect transistor in a circuit.

FIG. 4

## FIELD EFFECT TRANSISTOR HAVING A MEMBRANE OVERLYING THE GATE INSULATOR

Background and Description of the Invention

The invention relates to a field effect transistor, more particularly to a field effect transistor that includes a semiconductor substrate with separated drain and source regions of a polarity opposite to that of the substrate provided therein by diffusion. Also included is an electrically insulating layer overlying the gate region between the source and drain regions to function as a gate insulator. A membrane overlies the electrically insulating layer, and an electrical contact means connects the field effect transistor in an electrical circuit.

Such a field effect transistor (generally referred to as a "FET") which is in a form that is selectively sensitive to a chemical component is known. An example of this general type of FET is illustrated in United States Patent No. 4,020,830.

When it is connected in a fully electrical measuring circuit, a chemically sensitive field effect transistor (generally referred to as a "Chem FET") that is structurally adapted for that purpose can be used as a sensor in a liquid for selectively measuring the content therein of a chemical component, for example the content of $H^+$, $K^+$, $Ca^{++}$, $Cl^-$ ions. In this case, the term ISFET ("ion sensitive field effect transistor") is used to refer to such a Chem FET, or the content of an enzyme, an antibody or antigen, or the like.

In Analytical Chemistry 57 (1985), 1995-2002, E.J. Fogt et al describe ISFET's, as specimens of the species Chem FET, in which the gate insulator is coated with a polymer membrane and by means of which ions, such as $K^+$ ions, in a liquid can be selectively measured. A drawback that is inherent with such ISFET's is said to be the phenomenon that the coating of the gate insulator with the polymer membrane results in an unknown potential at the interface between the polymer membrane and the gate.

On the basis of test results achieved by means of ISFET's coated with a polymer membrane that is selectively sensitive to $K^+$ ions and ISFET's coated with a polymer membrane that is insensitive to a chemical component, E.J. Fogt et al, supra., suggests that the aforesaid unknown potential, which will be responsive to the activity of $H^+$ ions at the interface, is affected by the presence of carbon dioxide and organic acids in the measuring liquid, which can penetrate the polymer membrane by diffusion. Fogt et al therefore call for a thorough study of this phenomenon, which has an affect on the degree of selectivity of the ion sensitivity and on the stability of such a field effect transistor.

The special form of the FET used by Fogt et al, in which the gate insulator is coated with a membrane that is insensitive to a chemical component, is known per se from actual practice and literature. (See, for example, M. Fujihara et al in Journal of Electroanalytical Chemistry 106 (1980), pages 413 to 418. These FET's can be called reference field effect transistors ("REFET's").)

REFET's can be used in measurements employing the so-called "differential ISFET-pair" configuration. Inasmuch as, in such a measuring configuration, one of the ISFET's (the REFET) has a chemically insensitive membrane surface while both ISFET's are measured relative to a pseudo-reference electrode, the signals from the respective FET's can be subtracted from each other, so that a net sensitivity on account of the other, chemically selectively sensitive ISFET remains. However, the drawback mentioned by Fogt et al with reference to an ISFET having its gate insulator coated with a polymer membrane, will apply to a REFET too.

Yet another form of an ISFET having a membrane overlying its gate insulator is described by P.A. Comte et al in the article "A Field Effect Transistor as a solid-state Reference Electrode" in Analytica Chimica Acta 101 (1978), pages 247 to 252. This article concerns the use as a reference electrode of a pH sensitive ISFET that is in contact with a solution of constant pH. This solution contacting the pH sensitive ISFET is contained in a recess in the usual layer enveloping the transistor and is separated from the ambient by an electrically impervious membrane. The required connection between the reference electrode and the measuring liquid is established during the measurement by means of an open liquid connection in the form of, for example, a glass capillary having a length of 200 $\mu$ and a bore of about 20 $\mu$, which is passed through the membrane.

In "Transducers '85, Digest of Technical Papers" of the 1985 "International Conference on Solid-State Sensors and Actuators", in the article entitled "An Integrated Multiple-Sensor Chemical Transducer", pages 125 to 127, R.B. Brown et al include a discussion of Chem FET's. They observe that, in spite of certain distinct advantages of Chem FET's, no breakthrough towards use thereof in the technique on a general scale takes place because such Chem FET's have significant drawbacks. For example, they lack calibration stability and are inaccurate due to chemical noise because electrochemical membranes are not perfectly selective and the output signals of Chem FET based measuring equipment contain noise components due to interfering chemical materials.

It is an object of the invention to provide a FET of the type described herein, the membrane of which may or may not be chemically sensitive, which FET has enhanced characteristics especially insofar as stability and reliability during operation are concerned.

To this end, in a field effect transistor according to the invention, an electrolyte phase is present as an intermediate layer between the electrically insulating layer and the membrane, which electrolyte is of such composition that there is a thermodynamically determined chemical equilibrium at each of the boundary planes of the electrolyte phase.

The invention is based on the concept of replacing the boundary layer that is naturally present between the gate insulator and the selectively sensitive membrane, which boundary layer is undetermined as to form, locally prevailing chemical environment and effect on the locally prevailing potential, by an intermediate layer of well defined form and dimensions and of a material of known composition that is selected to allow a preselected and predetermined chemical environment to be maintained therein.

In accordance with an embodiment of the transistor according to the invention, the electrolyte phase is included in a system immobilizing this phase. For example, the electrolyte phase may be included in an immobilizing system that is a matrix formed of a polymer material, a gel material (such as agar-agar, gelatin), a hydrophile resin material, cellulose, agarose or a semi-porous material.

Examples of materials that are suitable for use for such a matrix are, insofar as the polymer materials are concerned: polyvinyl alcohol and polyvinyl alcohol cross-linked by means of NaOH (see T. Uragami and M. Sugihara, Angew. Makromol. Chem. 57, 1977, 123); polyvinyl alcohol cross-linked by means of UV cross-linking agents (K. Ichimura and J. Watanabe, J. Polym. Sci. Pol. Lett. Ed. 18, 1980, 613, ibid. 20, 1982, 1419); polyvinyl alcohol cross-linked with UV sensitizers (see United States Patent No. 3,169,868); and polyamides, polyesters, polyethers and polyvinyl acetates. Examples of the semi-porous materials for use in the matrix include: ceramics, glass, Teflon, nylon and epoxy material.

In accordance with an embodiment of the field effect transistor according to the invention in which the membrane overlying the gate insulator is selectively sensitive to a chemical component, the electrolyte phase contains a buffer solution and a constant amount of the chemical component to which the membrane is selectively sensitive.

In accordance with a more particular embodiment of the field effect transistor according to the invention in which the membrane overlying the gate insulator is selectively sensitive to a chemical component, the gate insulator is coated with an Ag/AgCl layer, and the electrolyte phase contains a constant amount of chloride ions in addition to the constant amount of the chemical component to which the membrane is selectively sensitive.

The invention will now be described in greater detail with reference to the accompanying drawings, in which:

Figure 1 schematically shows in cross-sectional view a sensor system based on an ISFET of known general structure provided with a chemically selectively sensitive membrane for measuring the ion activity;

Figure 2 schematically shows the junctions between the successive layers of an ISFET according to the invention in a direction away from the gate insulator via the intermediate layer and the chemically sensitive membrane toward the measuring liquid, and the change in potential within these layers;

Figure 3 shows the ISFET according to Figure 2 when used specifically for measuring the activity of the $K^+$ ion in a liquid;

Figure 4 shows an ISFET according to Figure 3, in which, however, an Ag/AgCl layer is present on the gate insulator;

Figure 5 graphically shows the results of a test for determining the drift pattern of an ISFET according to Figure 3; and

Figure 6 shows the drift pattern of a known ISFET for measuring the $K^+$ ion activity in a liquid, which ISFET does not include an intermediate layer in accordance with the invention.

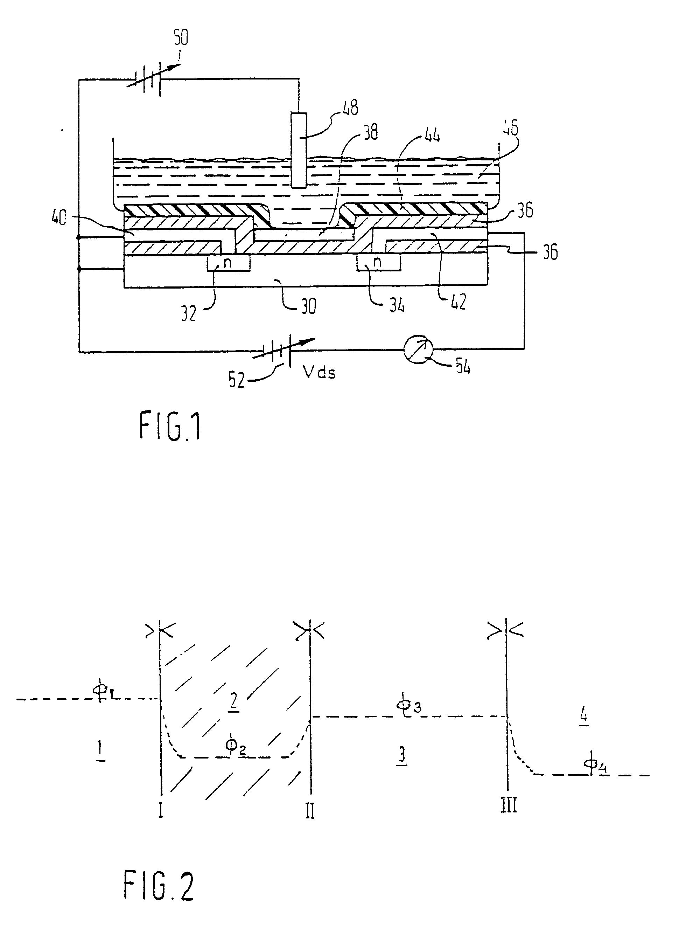

The known sensor system shown in Figure 1 comprises a p-type silicon substrate 30 and two n-type regions 32 and 34 formed in the surface of the substrate by diffusion, which regions have a thickness of, for example, 1 to 2 microns and are spaced approximately 20 microns apart. Region 34 is operative as the drain and region 32 as the source. The surface region of substrate 30 in between drain 34 and source 32 is the gate region.

A thin insulating layer 36 of, for example, silicon dioxide is deposited on the surface of the substrate to also overlie the gate region and portions of drain 34 and source 32. Conductive layers 40 and 42 of, for example, aluminum are deposited on source 32 and drain 34 for establishing electrical contact therewith. A membrane is provided on gate insulator 36 and adapted to selectively interact with a given type of ion in the measuring liquid 46.

The measuring circuit further includes a reference electrode 48, for example, an Ag/AgCl reference electrode, connected to a voltage source 50. A voltage source 52 is used to maintain a voltage difference between source 32 and drain 34, causing a current to flow between the source and the drain. Ammeter 54 is connected in the circuit between voltage source 52 and drain 34 for measuring the drain current intensity.

Due to the interaction between the ions in the measuring liquid and the membrane in the known sensor system shown in Figure 1, a potential difference will be established between the membrane and the measuring liquid. In consequence, with bias voltage 50 properly set, an electric field will be present in the current conduction region between source 32 and drain 34. The intensity of this electric field, which depends on the ion activity in the measuring liquid, determines the intensity of the current between drain and source. The current intensity measured by ammeter 54 will hence be indicative of the ion activity in measuring liquid 46.

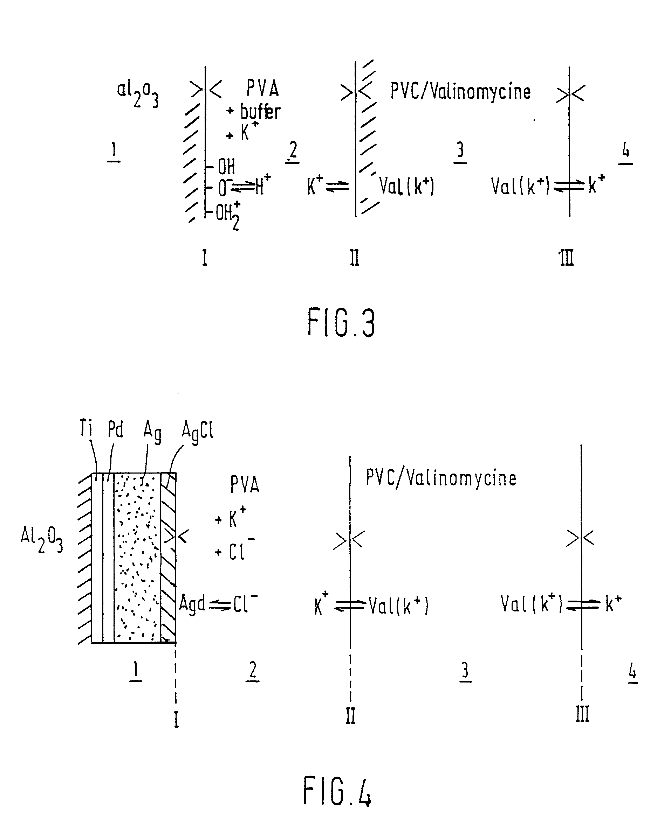

In Figure 2, numerals 1, 2, 3 and 4 successively denote the gate insulator, the intermediate layer, the chemically sensitive membrane and the measuring liquid. The junctions between the gate insulator and the intermediate layer, the intermediate layer and the membrane and the membrane and the measuring liquid are successively denoted by I, II and III. The broken line $\phi_1$, $\phi_2$, $\phi_3$, $\phi_4$ is a schematic representation of the change in potential over successive layers 1, 2, 3 and 4.

A specific embodiment of the chemically sensitive field effect transistor according to the invention is shown in Figure 3, in which analogue members and components are denoted by the same reference numerals as in Figure 2. The transistor according to Figure 3 is an ISFET sensitive to $K^+$ ions. Gate insulator 1 is of $Al_2O_3$ while polymer membrane 3 is a polyvinyl chloride/valinomycin (K) membrane. Measuring liquid 4 is blood.

Intermediate layer 2 is composed of a polyvinyl alcohol matrix containing $K^+$ ions in a concentration of 5mMol and a buffer solution having a pH of 4. As shown in Figure 3, thermodynamically defined chemical equilibriums will establish at junctions I and II, respectively. The resultant potential differences $\phi_2$-$\phi_1$ at junctions I and $\phi_3$-$\phi_2$ at junction II will be constant when the chemical environment has the composition defined above. A diffusion of $CO_2$ from measuring liquid R via $K^+$ sensitive membrane 3 into intermediate layer 2 will not affect the pH in the intermediate layer on account of the buffer solution present therein. At the given pH value of 4 of the buffer solution or at lower pH values, the $CO_2$ interference is fully suppressed

A $K^+$ ion sensitive ISFET as shown in Figure 3 can be manufactured as follows. A polyvinyl alcohol (PVA) matrix is formed on the surface of the gate region by causing a drop of a PVA/NaOH solution (weight ratio 8/1.5) to evaporate thereon. This results in a cross-linked PVA gel. This gel is equilibrated for 1 hour in $5.10^{-3}M$ potassium chloride in a phosphate buffer having a pH of 7.3. Subsequently, after blow drying, the membrane is provided thereon.

The $K^+$ ion sensitive ISFET's so manufactured were subjected to test measurements. The tests showed that the sensitivity of the valinomycin membrane ISFET is good and in a range of from 55 to 60 mV/dec. The decrease in sensitivity with time is very small: less than 1 mV/day.

A survey of the measuring results for ISFET's having a PVA matrix intermediate layer is given in the following table:

| ISFET | $S_K^+$ (mV/dec.) | | T=37°C. |
| --- | --- | --- | --- |
| No. | 1st day | 2nd day | 3rd day |
| IF 9101 | 59 | 60 | 58 |
| 9104 | 59 | 58 | 58 |
| 9106 | 58 | 57 | 57 |
| 9117 | | 59 | 60 |
| 8926 | | 57 | 60 |
| 8938 | | 57 | 60 |
| 8345 | | | 57 |
| 8350 | | | 57 |

A properly defined chemical equilibrium and hence a constant potential difference $\phi_2$-$\phi_1$ at junction I can also be achieved by applying to gate insulator 1 a layer of silver (Ag) bonded to a titanium-palladium base and electrochemically or chemically chlorated (AgCl). In this case, not the [H$^+$] but the [Cl$^-$] is kept constant in the intermediate layer. Consequently, no buffer is required.

Reference elements of the Ag/AgCl type that may be used within the scope of the invention are for example, Ag/AgI; Hg/Hg$_2$Cl$_2$ and other metal/metal-halogen-compound combinations the metal-halogen-compound of which has a low solubility product, as described in the book "Reference Electrodes, Theory and Practice" (D.J.G. Ives and G.J. Janz, Ed.), Acad. Press., New York, 1961.

Regarding the structure of an ISFET having an Ag/AgCl-layer overlying the gate insulator, by way of example reference is made to Figure 4, in which figure the same reference numerals as shown in Figure 3 are used for layers having an analogue function. Intermediate layer 2 is composed of a polyvinyl alcohol matrix containing K$^+$ ions in a concentration of 5mMol and Cl$^-$ ions in a concentration of 0.2 Mol and AgNO$_3$ in a very low concentration of $1.5 \times 10^{-5}$ Mol. As shown in Figure 4, thermodynamically defined chemical equilibriums establish at junctions I and II, respectively.

Summarizing, the invention is applicable to chemically sensitive field effect transistors including a membrane containing a component A, as a result whereof a selectivity relative to a chemical component B in the measuring liquid is achieved.

Example of such membranes are:
PVC (polyvinyl chloride) valinomycin for K$^+$ ions;
PVC (N,N' [(4R,5R-dimethyl-1,8-dioxo-3,6-dioxo-octamethylene]-bis-(12-methyl-amino-dodecanoic acid ethyl ester) for Ca$^{++}$ ions;
PVC-tridodecylamine for H$^+$ ions;
PVC crown ethers for K$^+$, Na$^+$ ions;
Polystyrene with coupled crown ethers for K$^+$, Na$^+$ ions;
Polyacrylates with coupled crown ethers for K$^+$, Na$^+$ ions;
PVC Hemispherands for K$^+$, Na$^+$, Li$^+$ ions;
PVC Spherands for K$^+$, Na$^+$ Li$^+$ ions;
Polystyrene and other polymers with chemically anchored Spherands and Hemispherands; and
Silicone rubber membranes with ionophores as above and further as described in: "Ion Selective Electrodes", M.A. Arnold and M.E. Meyerhoff, Anal. Chem. (1984) 2OR-48R; W.E. Morf and W. Simon in "Ion Selective Electrodes in Analytical Chemistry", Volume I, Chapter 3 (H. Freiser Ed.), Plenum Press, New York, 1978; and (for potentiometric enzyme methods) ibid., Volume II, 1980.

The invention is also applicable to a field effect transistor including a membrane having no or only a very low sensitivity to a component in the measuring liquid, such as reference FET's (REFET's).

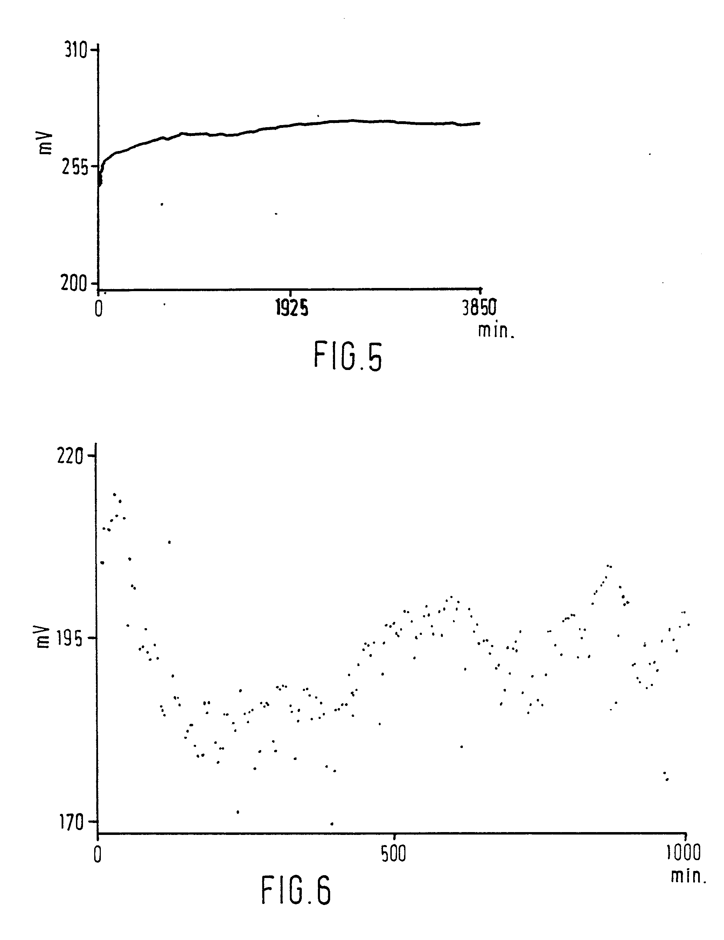

The drift pattern of ISFET No. IF 8350 of the preceding table was determined. Connected in a measuring circuit, the ISFET was immersed in a 0.005 M KCl solution together with a reference electrode. The temperature of the solution was 37°C. A number (385) of measurements were performed at intervals of 10 minutes. The resultant drift pattern is shown in Figure 5.

For comparison, a similar test was performed with an ISFET lacking the intermediate layer according to the invention, immersed in a 0.005 M KCl solution at a solution temperature of 37°C. A number (200) of measurements were performed at intervals of 5 minutes. The test results are shown in Figure 6.

A comparison of the diagrams of Figure 5 and Figure 6 clearly proves the stabilizing effect of the intermediate layer on the drift pattern of the K+ ion sensitive ISFET.

## Claims

1. An improved field effect transistor comprising a semiconductor substrate with separated drain and source regions of polarity opposite to that of said substrate provided therein by diffusion; an electrically insulating layer overlying the gate region between said source and drain regions; a membrane overlying said electrically insulating layer, said membrane being selectively sensitive to a chemical component; and electrical circuit contact means for connecting the field effect transistor in an electrical circuit, wherein the improvement comprises: an electrolyte phase present as an intermediate layer between said electrically insulating layer and said membrane, and said electrolyte is of a composition to ensure a thermodynamically determined chemical equilibrium at each of the boundary planes of said electrolyte phase.

2. The field effect transistor according to claim 1, wherein said electrolyte phase contains a buffer solution with a pH that is equal to or less than about 4 and a substantially constant amount of the chemical component to which said membrane is selectively sensitive.

3. The field effect transistor according claim 1, wherein said electrolyte phase contains, in addition to said substantially constant amount of the chemical component to which said membrane is selectively sensitive, a substantially constant amount of halogen ions in combination with a metal/metal-halogen-compound layer overlying said gate insulator, said metal-halogen-compound having a low solubility product.

4. The field effect transistor according to claim 3, wherein said metal/metal-halogen-compound layer is an AG/AgCl layer.

5. The field effect transistor according to claim 3, wherein said metal/metal-halogen-compound layer is an Ag/AgI layer.

6. The field effect transistor according to claim 3, wherein said metal/metal-halogen-compound layer is an Hg/Hg$_2$Cl$_2$ layer.

7. An improved field effect transistor comprising a semiconductor substrate with separate drain and source regions of a polarity opposite to that of said substrate provided therein by diffusion; an electrically insulating layer overlying the gate region between said source and drain regions; a membrane overlying said electrically insulating layer, said membrane being substantially not selectively sensitive to a chemical component; and electrical contact means for connecting the field effect transistor in an electrical circuit, wherein the improvement comprises: an electrolyte phase present as an intermediate layer between said electrically insulating layer and said membrane, and said electrolyte is of a composition to ensure a thermodynamically determined chemical equilibrium at each of the boundary planes of said electrolyte phase.

8. The field effect transistor according to claim 7, wherein said electrolyte phase contains a buffer solution with a pH that is equal to or less than about 4.

9. The field effect transistor according to claim 7, wherein said electrolyte phase contains a substantial amount of halogen ions in combination with a metal/metal-halogen-compound layer overlying said gate insulator, said metal-halogen-compound having a low solubility product.

10. The field effect transistor according to claim 9, wherein said metal/metal-halogen-compound layer is an Ag/AgCl layer.

11. The field effect transistor according to claim 9, wherein said metal/metal-halogen-compound layer is an Ag/AgI layer.

12. The field effect transistor according to claim 9, wherein said metal/metal-halogen-compound layer is an Hg/Hg$_2$Cl$_2$ layer.

FIG.1

FIG.2

FIG.3

FIG.4

FIG.5

FIG.6